# EUROPÄISCHE PATENTANMELDUNG

(11) **EP 4 609 698 A1**
(43) Veröffentlichungstag der Anmeldung: **03.09.2025**
(21) Anmeldenummer: 24159915.8
(22) Anmeldetag: 27.02.2024
(51) Int. Cl.: A01D 78/10

(54) **VERFAHREN UND SYSTEM ZUR PLANUNG EINES SCHWADS**

(71) Anmelder: Deere & Company, Moline, IL 61265 (US)
(72) Erfinder: BROCKE, Stefan, 68163 Mannheim (DE); SCHOTT, Florian, 68163 Mannheim (DE)
(74) Vertreter: Dehnhardt, Florian Christopher

(57) **Zusammenfassung**

Die Erfindung betrifft ein Verfahren zur Planung eines Schwads (12), welches von einem Schwader (14) durch Zusammenrechen eines auf einem Agrarfeld (16) gemähten Erntegutes (18) erstellt wird. Dabei werden Planungsdaten (d_plan) des Schwads (12) in Abhängigkeit von mindestens einem der folgenden Planungsparameter ermittelt:
- Felddaten (d_f), welche mindestens ein Merkmal des gemähten Agrarfeldes (16) repräsentieren,
- ein Typ (typ_er) des Erntegutes (18),
- ein Typ (typ_schw) eines geplanten Schwaders (14),
- ein Typ (typ_ma) einer geplanten Bergungsmaschine (24) zum Bergen des erstellten Schwads (12),
- eine Schnittlänge (l_schn) des während einer Bergung verarbeiteten Schwadmaterials (12).

## Beschreibung

Die Erfindung betrifft ein Verfahren und ein System zur Planung eines Schwads, welches von einem Schwader durch Zusammenrechen eines auf einem Agrarfeld gemähten Erntegutes erstellt wird.

In der Landwirtschaft ist es bekannt, gemähtes Gras zu Schwaden zusammenzurechen und danach die Schwaden mit einer Bergungsmaschine, z.B. einem Ladewagen, aufzusammeln und zu einem Lagerort zu transportieren. Das gelagerte Gras wird üblicherweise in Form von Silage als Futtermittel verwendet. Dabei ist eine effiziente Herstellung des Futtermittels von Bedeutung.

Es ist daher Aufgabe der vorliegenden Erfindung, die Effizienz der Verarbeitung eines gemähten Erntegutes zu verbessern.

Diese Aufgabe wird durch ein Verfahren mit den Merkmalen des unabhängigen Patentanspruchs 1 und ein System mit den Merkmalen des unabhängigen Patentanspruchs 12 gelöst.

Weitere vorteilhafte Ausgestaltungen der Erfindung gehen aus den Unteransprüchen hervor.

Gemäß Anspruch 1 wird ein Verfahren zur Planung eines Schwads vorgeschlagen, welches von einem Schwader durch Zusammenrechen eines auf einem Agrarfeld gemähten Erntegutes erstellt wird. Zur Planung des zu erstellenden Schwads werden Planungsdaten in Abhängigkeit von einem oder mehreren Planungsparametern ermittelt. Als Planungsparameter ist mindestens einer der folgenden Parameter vorgesehen:
- Felddaten, welche mindestens ein Merkmal des gemähten Agrarfeldes repräsentieren.
- Ein Typ des Erntegutes, z.B. Gras bzw. Silage, Heu, Stroh, Luzerne, Raps.
- Ein Typ eines geplanten Schwaders für die Erstellung des Schwads. Die unterschiedlichen Typen des Schwaders können sich auf unterschiedliche Schwadertechnologien (z.B. Kammschwader, Kreiselschwader, Bandrechen, Frontschwader, Heckschwader, Mittelschwader, Seitenschwader, Anzahl der Schwadtrommeln oder Schwadkreisel) oder auf unterschiedliche Leistungsmerkmale innerhalb derselben Schwadertechnologie, z.B. unterschiedliche Schwaderarbeitsbreiten, beziehen.
- Ein Typ einer geplanten Bergungsmaschine zum Bergen des erstellten Schwads. Die unterschiedlichen Typen der Bergungsmaschine können sich auf unterschiedliche Maschinenfunktionen (z.B. Feldhäcksler, Ballenpresse, Lade- oder Silowagen) oder auf unterschiedliche Leistungsmerkmale innerhalb derselben Maschinenfunktion beziehen. Die Bergungsmaschine kann eine Einzelmaschine oder eine Kombination mehrerer Maschinen (z.B. Feldhäcksler und Ladewagen) sein.
- Eine Schnittlänge des während einer Bergung verarbeiteten Schwadmaterials. Hierbei handelt es sich insbesondere um einen an der Bergungsmaschine eingestellten Längeneinzug für das Schwadmaterial.

Unter Berücksichtigung mindestens eines der vorgenannten Planungsparameter können Planungsdaten ermittelt werden, welche eine planmäßige Soll-Dimensionierung eines Schwads und somit eine optimierte Schwadgröße ermöglichen. Dies erleichtert ein strukturiertes Vorgehen und verbessert folglich die Effizienz bei der Erstellung eines Schwads oder mehrerer Schwaden. Insbesondere können die Planungsdaten dazu beitragen, die Effizienz eines autonom fahrenden landwirtschaftlichen Nutzfahrzeugs mit einem Schwader (nachfolgend kurz Schwaderfahrzeug) zu verbessern. Mit anderen Worten können die Planungsdaten den Automatisierungsgrad bei der Erstellung von Schwaden erhöhen. Im Falle einer Steuerung des Schwaderfahrzeugs durch einen Fahrzeugführer können die Planungsdaten den Fahrzeugführer darin unterstützen, Entscheidungen für eine effiziente Feldarbeit zu treffen.

Bei den Planungsdaten handelt es sich insbesondere um geplante schwadbezogene Größen, beispielsweise eine Geoposition bzw. Relativlage des Schwads auf dem Agrarfeld, ein Schwadradius bei einem gekrümmten Schwadverlauf, eine Schwadlänge, eine Schwadbreite bzw. Ablagebreite des Schwadmaterials oder Daten für ein Vorgewende auf dem Agrarfeld.

Der Inhalt dieser Planungsdaten hat einerseits relevanten Einfluss auf die Effizienz bei der Erstellung des Schwads und dessen Bergung und kann andererseits bei dem Arbeitseinsatz des Schwaderfahrzeugs präzise umgesetzt werden. Planungsdaten können als in Abhängigkeit von mindestens einem Planungsparameter optimierte Größen betrachtet werden. So können etwa die Geoposition des Schwads in Abhängigkeit von einer Feldtopologie des gemähten Agrarfeldes und der Schwadradius sowie die Schwadbreite in Abhängigkeit von spezifischen Fahrzeugdaten des Bergungsfahrzeugs optimiert werden.

Vorzugsweise enthalten die Felddaten eine Feldtopologie und/oder Feldgrenzen und/oder einen Feldertrag (z.B. in kg/m²) des gemähten Agrarfeldes. Der Inhalt dieser Felddaten unterstützt eine exakte Kenntnis der Eigenschaften des gemähten Agrarfeldes, was eine entsprechend präzisere Schwadplanung ermöglicht.

Der Feldertrag des gemähten Agrarfeldes kann beispielsweise datentechnisch durch eine Drohne erfasst werden. Alternativ oder zusätzlich kann an der Mähmaschine zum Mähen des Erntegutes ein geeigneter Sensor angeordnet sein, welcher den Feldertrag datentechnisch erfasst.

In einer bevorzugten Ausführungsform werden die Planungsdaten in Abhängigkeit von bereitgestellten Bergungs-Kenndaten der geplanten Bergungsmaschine ermittelt. Die Bergungs-Kenndaten beinhalten bergungsbezogene Informationen der für die Schwadbergung geplanten Bergungsmaschine. Insbesondere kann aus den Bergungs-Kenndaten eine Bergungskapazität (z.B. in kg/m) entnommen oder abgeleitet werden, welche eine relevante Information für eine Anpassung und Optimierung des geplanten Schwads bezüglich der ausgewählten oder geplanten Bergungsmaschine ist.

Die Bergungs-Kenndaten können als spezifische Daten für einen bekannten Typ der Bergungsmaschine und für einen bekannten Typ des Erntegutes betrachtet werden. Sie werden beispielsweise in einer Datenbank oder Datenzentrale für einen Datenabruf bereitgestellt sein. Die Bergungs-Kenndaten können beispielsweise als eine Kennlinie oder eine Datentabelle bereitgestellt werden.

Vorzugsweise werden die Bergungs-Kenndaten in Abhängigkeit von mindestens einem der vorgenannten Planungsparameter generiert und können dann bereitgestellt werden. Hierdurch wird eine planmäßig optimierte Soll-Dimensionierung des Schwads oder der Schwaden effizient unterstützt.

Insbesondere repräsentieren die Bergungs-Kenndaten ein Verhältnis zwischen einer Bergungskapazität (z.B. in kg/m) und einer Bergungsgeschwindigkeit (z.B. in kg/h) der Bergungsmaschine. Hierdurch können verfahrenstechnisch einfach bei der Ermittlung der Planungsdaten wirtschaftliche Kriterien wie etwa der Zeitaufwand für die Bergung des Ernteguts als auch Qualitätskriterien für das Erntegut berücksichtigt werden.

Aus den Bergungs-Kenndaten kann eine Optimum-Bergungskapazität bestimmt werden. Vorzugsweise kann die Optimum-Bergungskapazität als eine Bergungskapazität betrachtet werden, welche unter Berücksichtigung spezifischer Kriterien (z.B. Wirtschaftlichkeit, Qualität) als die vorteilhafteste Bergungskapazität der Bergungsmaschine eingeschätzt wird.

Aus der Optimum-Bergungskapazität kann eine Idealgröße des geplanten Schwads abgeleitet werden, indem die Optimum-Bergungskapazität mit der geplanten Größe des Schwads bzw. Schwaddicke gleichgesetzt wird. Die Schwaddicke kann als Masse des Schwadmaterials pro Längeneinheit (z.B. kg/m) definiert sein.

Insbesondere entspricht die Optimum-Bergungskapazität einer Bergungskapazität der Bergungsmaschine bei einer maximalen Bergungsgeschwindigkeit. Die maximale Bergungsgeschwindigkeit entspricht einer maximalen Materialflussgeschwindigkeit, d.h. es wird eine maximale Masse des Schwadmaterials pro Zeiteinheit geborgen. Hierdurch wird die Wirtschaftlichkeit und Effizienz bei der Bergung des Schwads oder der Schwaden unterstützt.

Weiter vorzugsweise wird zur Ermittlung der Planungsdaten eine definierte Arbeitsstrategie zur Erstellung des Schwads berücksichtigt. Dabei wird die Arbeitsstrategie in Abhängigkeit von mindestens einem Planungsparameter und/oder der Plan-Bergungskapazität und/oder dem Typ des geplanten Schwaders definiert. Die Arbeitsstrategie kann folglich im Sinne eines möglichst effizienten Arbeitseinsatzes des geplanten Schwaders definiert werden, so dass auch die Planungsdaten die gewünschte effiziente Verarbeitung des gemähten Erntegutes zusätzlich unterstützen.

Vorteilhaft kann die Arbeitsstrategie zusätzlich in Abhängigkeit von einer Ideal-Feldarbeitsbreite innerhalb des gemähten Agrarfeldes definiert werden. Dabei wird die Ideal-Feldarbeitsbreite in Abhängigkeit von der Optimum-Bergungskapazität (d.h. auch von der idealen Schwaddicke) und/oder dem Feldertrag ermittelt. Die Ideal-Feldarbeitsbreite erstreckt sich innerhalb des gemähten Agrarfeldes quer zu einer Fahrspur des Schwaders. Dabei ist die Erstreckung derart dimensioniert, dass die in dieser Erstreckung enthaltene Menge oder Masse des gemähten Erntegutes (z.B. pro Meter entlang der Schwadlänge) für das geplante Schwad bzw. für die ermittelte Optimum-Bergungskapazität oder ermittelte ideale Schwaddicke genau ausreichend ist. Hierdurch wird die Generierung einer effizienten Arbeitsstrategie für den Schwader unter Berücksichtigung verfügbarer Feld- und/oder Technikdaten weiter unterstützt.

Die Ideal-Feldarbeitsbreite kann beispielsweise auch (ausgehend von einer einzigen Fahrt des Schwaders) eine ideale Schwaderarbeitsbreite des Schwaders repräsentieren. In der Praxis weichen die verfügbaren Schwaderarbeitsbreiten des geplanten Schwaders oftmals von dieser idealen Schwaderarbeitsbreite ab. Diese Abweichung kann im Rahmen der Arbeitsstrategie z.B. durch eine höhere Anzahl von Fahrten bzw. Fahrspuren des Schwaders mit der verfügbaren Schwaderarbeitsbreite ausgeglichen werden.

Vorzugsweise enthält die Arbeitsstrategie mindestens eine Arbeitsgröße zur Erstellung des Schwads. Die Arbeitsgröße ist insbesondere eine geplante Anzahl von Fahrspuren des Schwaders bzw. eines mit ihm gekoppelten landwirtschaftlichen Nutzfahrzeugs (z.B. ein Traktor bzw. Schlepper), um das geplante Schwad zu erstellen. Bei einer weiteren Variante repräsentiert die Arbeitsgröße eine geplante Feldarbeitsbreite innerhalb des gemähten Agrarfeldes für die Erstellung des Schwads. Vorzugsweise wird die geplante Feldarbeitsbreite in Abhängigkeit von der Ideal-Feldarbeitsbreite ermittelt. Die geplante Feldarbeitsbreite entspricht vorzugsweise mindestens der einfachen Schwaderarbeitsbreite und besonders bevorzugt einem (insbesondere ganzzahligen) Vielfachen der Schwaderarbeitsbreite. Außerdem entspricht die geplante Feldarbeitsbreite insbesondere der vorgenannten geplanten Anzahl von Fahrspuren multipliziert mit der geplanten Schwaderarbeitsbreite des Schwaders.

Analog zu der geplanten Anzahl von Fahrspuren und der geplanten Feldarbeitsbreite kann auch die geplante Schwaderarbeitsbreite als eine Arbeitsgröße verwendet werden.

Mit der oder den Arbeitsgrößen kann die definierte Arbeitsstrategie eine präzise Planung für einen effizienten Arbeitseinsatz beinhalten. Dies unterstützt eine entsprechend präzise Ermittlung der Planungsdaten.

Die geplante Anzahl von Fahrspuren des Schwaders zur Erstellung des Schwads kann mit einem Nutzfahrzeug zeitlich nacheinander oder mit mehreren gleichzeitig aktiven Nutzfahrzeugen befahren werden.

Weiter vorteilhaft werden zur Ermittlung der Planungsdaten eine maximale Schwadbreite bzw. maximale Ablagebreite des Schwads berücksichtigt, wobei die maximale Schwadbreite in Abhängigkeit von dem Typ des geplanten Schwaders und/oder dem Typ der geplanten Bergungsmaschine definiert wird. Somit werden weitere Technikdaten berücksichtigt, um die Präzision der Planungsdaten zu unterstützen.

Die Erfindung betrifft weiter ein System zur Planung eines Schwads, mit einem Schwader zur Erstellung des Schwads durch Zusammenrechen eines auf einem Agrarfeld gemähten Erntegutes und mit einer Steuereinheit zur Durchführung des Verfahrens nach einem der Ansprüche 1 bis 11.

Das erfindungsgemäße System weist die oben beschriebenen Vorteile des erfindungsgemäßen Verfahrens auf. Dabei kann die Steuereinheit geeignete Algorithmen zur Ermittlung der Planungsdaten enthalten. Das System erlaubt es, Planungsdaten für ein Schwad oder mehrere Schwaden bereitzustellen, welche auf eine präzise und effiziente Erstellung und Bergung der Schwaden ausgerichtet sind. Dies unterstützt eine qualitativ hochwertige Futtermittelherstellung (z.B. Silage). Die Planungsdaten für eine optimierte Erstellung des Schwads entlasten den Fahrzeugführer eines mit dem Schwader gekoppelten landwirtschaftlichen Nutzfahrzeugs bei seinem Arbeitseinsatz. Außerdem können die Planungsdaten als eine realistische Datenbasis für eine Automatisierung eines effizienten Arbeitsprozesses bei der Erstellung von Schwaden dienen.

In einer bevorzugten Ausführungsform ist die Steuereinheit in einem mit dem Schwader gekoppelten und den Schwader steuernden landwirtschaftlichen Nutzfahrzeug integriert. Sie kann dort beispielsweise mit einem Systembus (z.B. ISO, CAN) und/oder mit anderen Funktionseinheiten des Nutzfahrzeugs verbunden sein. Der hierdurch mögliche Datenaustausch kann eine präzise und effiziente Funktionalität des Systems unterstützen. Insbesondere handelt es sich bei dem mit dem Schwader gekoppelten Nutzfahrzeug um ein autonom fahrfähiges bzw. selbstfahrendes Fahrzeug. Hierdurch lässt sich der Automatisierungsgrad bei dem Arbeitseinsatz zur Erstellung von Schwaden weiter erhöhen.

Vorzugsweise weist das System mindestens eine der folgenden Komponenten auf, welche mit der Steuereinheit über eine Datenverbindung verbunden ist:
- Eine Benutzerschnittstelle zur Eingabe von Daten. Hierdurch können benutzergestützte, insbesondere vom Fahrzeugführer stammende, Daten bei der Ermittlung der Planungsdaten technisch einfach berücksichtigt werden.
- Ein Positionserfassungssystem (z.B. GPS), welches vorzugsweise am landwirtschaftlichen Nutzfahrzeug angeordnet ist.
- Eine Datenzentrale, von der Felddaten abrufbar sind, welche mindestens ein Merkmal des gemähten Agrarfeldes repräsentieren. Hierdurch kann die Steuereinheit effizient auf Felddaten zugreifen, welche für die Ermittlung der Planungsdaten relevant sind.
- Eine Mähmaschine zum Mähen des Erntegutes.
- Eine Bergungsmaschine zur Bergung des erstellten Schwads.
- Eine Datenbank mit Daten, welche Bergungs-Kenndaten der Bergungsmaschine repräsentieren. Dies unterstützt eine Versorgung der Steuereinheit mit für die Ermittlung der Planungsdaten relevanten Eingangsdaten.

Die Erfindung wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:
- Fig. 1: eine blockschaltbildartige Darstellung des erfindungsgemäßen Systems,
- Fig. 2: eine blockschaltbildartige Darstellung von Einzelheiten des erfindungsgemäßen Verfahrens,
- Fig. 3a: ein schematischer Ausschnitt eines gemähten Agrarfeldes mit einer Arbeitsstrategie zur Erstellung eines Schwads,
- Fig. 3b: ein schematischer Ausschnitt eines gemähten Agrarfeldes mit einer anderen Arbeitsstrategie zur Erstellung eines Schwads.

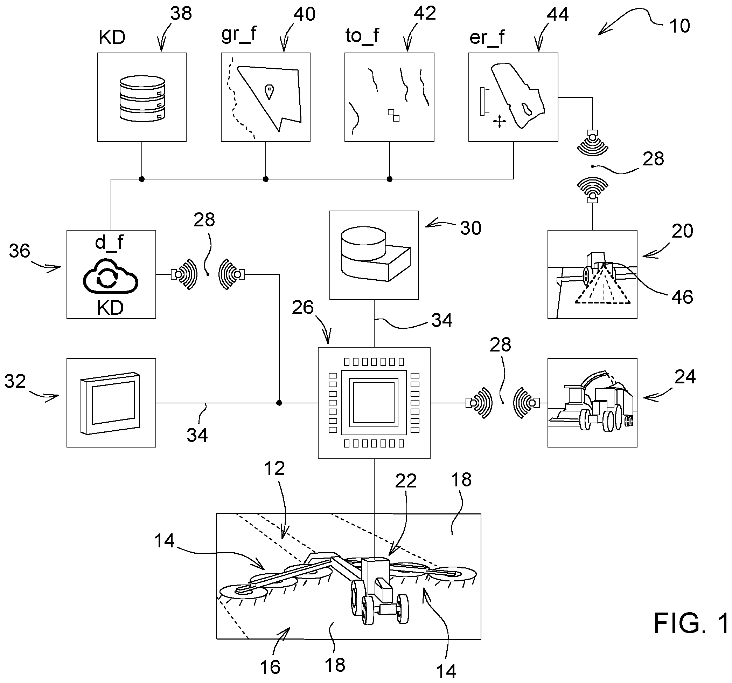

Fig. 1 zeigt ein System 10 zur Planung eines Schwads 12, welches von einem Schwader 14 durch Zusammenrechen eines auf einem Agrarfeld 16 gemähten Erntegutes 18, z.B. Futtergras, erstellt wird. Zuvor wurde das Erntegut 18 mittels einer Mähmaschine 20 gemäht. Der Schwader 14 ist an einem landwirtschaftlichen Nutzfahrzeug 22 in Form eines Traktors angeordnet und wird von dem Nutzfahrzeug 22 gesteuert. Das Schwad 12 oder die Schwaden 12 werden mittels einer Bergungsmaschine 24 eingesammelt bzw. geborgen. Die Bergungsmaschine 24 kann eine Einzelmaschine oder eine Kombination mehrerer Maschinen sein. In Fig. 1 ist eine Bergung mittels einer Kombination aus einem Feldhäcksler und einem Ladewagen angedeutet.

Zur Planung des Schwads 12 werden in einer Steuereinheit 26 verschiedene Planungsdaten d_plan generiert. Die Steuereinheit 26 ist vorzugsweise in dem Nutzfahrzeug 22 integriert. Das Nutzfahrzeug 22 ist entweder von einem Fahrzeugführer gesteuert oder als autonomes Fahrzeug automatisiert auf dem Agrarfeld 16 aktiv.

Das Nutzfahrzeug 22 und weitere Komponenten des Systems 10 sind auf unterschiedliche Weise über eine Datenverbindung mit der Steuereinheit 26 verbunden, um die Planung des Schwads 12 durchzuführen. So kommuniziert die Bergungsmaschine 24 über eine drahtlose Datenverbindung 28 mit der Steuereinheit 26. Ein Positionserfassungssystem 30 und eine Benutzerschnittstelle 32 (z.B. Tastatur und Bildschirm zur Eingabe und/oder Anzeige von Daten) sind im oder am Nutzfahrzeug 22 angeordnet und jeweils über eine drahtgebundene Datenverbindung 34 mit der Steuereinheit 26 verbunden. Über eine weitere drahtlose Verbindung 28 ist die Steuereinheit 26 mit einer Datenzentrale 36 verbunden. Letztere kann basierend auf einer Cloud-Technologie aufgebaut sein. Sie kann als zentraler Datenspeicher und/oder Datenverarbeitungszentrum für verschiedene Feldaktivitäten eines Landwirts bzw. einer Farm dienen. Mittels der Datenzentrale 36 kann die Steuereinheit 26 verschiedene Daten empfangen. Diese Daten können beispielsweise in einer Kapazitäts-Datenbank 38 enthaltene spezifische Bergungs-Kenndaten KD unterschiedlicher Bergungsmaschinen 24 (z.B. Feldhäcksler, Ballenpressen, Silowagen) beinhalten oder Felddaten d_f beinhalten, welche mindestens ein Merkmal des gemähten Agrarfeldes 16 repräsentieren. Beispiele für diese Felddaten d_f sind eine digitale Feldgrenzenkarte 40, eine digitale Topologiekarte 42 und eine digitale Ertragskarte 44.

Die Ertragskarte 44 kann beispielsweise mittels der Sensordaten einer Drohne oder mittels der Sensordaten eines geeigneten Sensors 46 an der Mähmaschine 20 generiert werden. Die Mähmaschine 20 kann die Sensordaten (optional in bereits verarbeiteter Form) über eine weitere drahtlose Datenverbindung 28 an eine die digitale Ertragskarte 44 enthaltende Datenbank oder an die Datenzentrale 36 senden. Alternativ kann die digitale Ertragskarte 44 von einer anderen externen Datenquelle bereitgestellt werden.

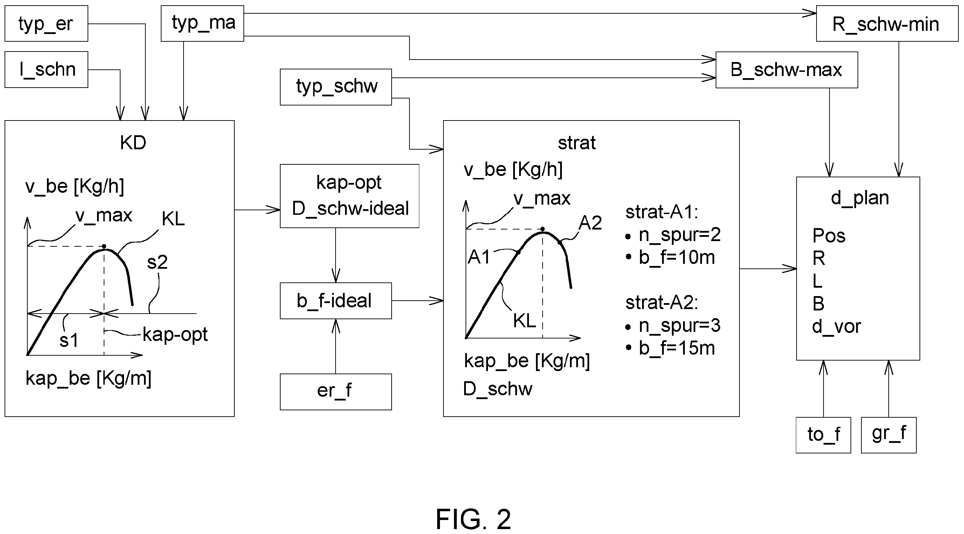

In Fig. 2 ist beispielhaft ein Verfahrensablauf zur Planung des zu erstellenden Schwads 12 dargestellt. Dabei werden Planungsdaten d_plan des Schwads 12 in Abhängigkeit von mehreren Planungsparametern ermittelt. Als Planungsparameter werden insbesondere die bereits erwähnten Felddaten d_f des gemähten Agrarfeldes 16 verwendet, welche eine Feldtopologie to_f, Feldgrenzen gr_f und er_f des gemähten Agrarfeldes 16 umfassen.

Als weitere Planungsparameter können ein Typ typ_er des Erntegutes 18, ein Typ typ_schw des für die Erstellung des Schwads 12 geplanten Schwaders 14, ein Typ typ_ma der für die Bergung geplanten Bergungsmaschine 24 und eine Schnittlänge l_schn des während der Bergung verarbeiteten Schwadmaterials 12 berücksichtigt werden.

Die vorgenannten Planungsparameter können als Eingangsgrößen für das Verfahren bzw. für einen Algorithmus in der Steuereinheit 26 zur Durchführung des Verfahrens betrachtet werden. Verschiedene Planungsparameter bzw. Eingangsgrößen können unmittelbar zur Ermittlung der Planungsdaten d_plan verwendet werden oder zunächst zur Ermittlung, Berechnung, Bestimmung, Festlegung bzw. Definition anderer Größen verwendet werden, welche der Ermittlung oder Ableitung von Planungsdaten d_plan dienen.

Mit Hilfe der Planungsdaten d_plan kann ein Schwad 12 auf dem gemähten Agrarfeld 16 unter Berücksichtigung verschiedener Felddaten d_f derart planmäßig erstellt werden, dass die Kapazität der verwendeten Bergungsmaschine 24 optimal genutzt und die Effizienz bei der Bergung des Schwads 12 verbessert ist.

Die Planungsdaten d_plan enthalten insbesondere mindestens eine der folgenden Größen oder Informationen: eine geplante Relativlage bzw. Geoposition Pos des Schwads 12 innerhalb des Agrarfeldes 16, ein Schwadradius R bei einem gekrümmten Schwadverlauf, eine Schwadlänge L, eine Schwadbreite B bzw. Ablagebreite des Schwadmaterials 12 und Daten d_vor eines Vorgewendes auf dem Agrarfeld 16.

Bei dem dargestellten Ablauf gehen beispielsweise die Feldgrenzen gr_f und die Feldtopologie to_f unmittelbar zur Ermittlung von Planungsdaten d_plan ein. Außerdem wird zur Ermittlung der Planungsdaten d_plan ein minimaler Schwadradius R_schw-min berücksichtigt, welcher von der geplanten Bergungsmaschine 24 bzw. dessen Typ typ_ma abgeleitet wird. Zudem wird zur Ermittlung der Planungsdaten d_plan eine maximale Schwadbreite B_schw-max berücksichtigt, welche in Abhängigkeit von dem Typ typ_schw des geplanten Schwaders 14 und/oder dem Typ typ_ma der geplanten Bergungsmaschine 24 definiert wird.

Darüber hinaus werden der Typ typ_er des Ernteguts 18, die Schnittlänge l_schn, der Typ typ_schw des geplanten Schwaders 14, der Typ typ_ma der Bergungsmaschine 24 und der Feldertrag er_f dazu verwendet, zunächst andere Größen zu generieren, welche dann für die Ermittlung der Planungsdaten d_plan verwendet werden.

In Abhängigkeit von der Schnittlänge l_schn, dem Typ typ_er des Erntegutes 18 und dem Typ typ_ma der Bergungsmaschine 24 werden Bergungs-Kenndaten KD der Bergungsmaschine 24 generiert und für die Verfahrensdurchführung bereitgestellt. Alternativ können die Bergungs-Kenndaten KD in der Datenzentrale 36 bereitgestellt werden. Wie in Fig. 2 erkennbar, können die Planungsdaten d_plan in Abhängigkeit von den Bergungs-Kenndaten KD ermittelt werden.

Die Bergungs-Kenndaten KD beinhalten insbesondere eine Kennlinie KL, welche ein Verhältnis zwischen der Bergungskapazität kap_be (in kg/Meter) und einer Bergungsgeschwindigkeit v_be (in kg/Stunde) der Bergungsmaschine 24 repräsentieren. In einem Sektor s1 der Kennlinie KL ist die Fahrgeschwindigkeit der Bergungsmaschine 24 etwa konstant, während im Sektor s2 der Kennlinie KL die Fahrgeschwindigkeit der Bergungsmaschine 24 reduziert werden muss, um die größere Menge des Schwadmaterials 12 bergen zu können. Dies senkt die Bergungsgeschwindigkeit v_be und folglich auch die Effizienz der Bergung.

Aus der Kennlinie KL kann eine als optimal betrachtete Bergungskapazität kap-opt der geplanten Bergungsmaschine 24 bestimmt werden. Dabei entspricht das Maximum der Kennlinie KL einer maximalen Bergungsgeschwindigkeit v_max, welche die effizienteste Bergung des Schwads 12 ermöglicht. Die Optimum-Bergungskapazität kap-opt im Maximum der Kennlinie KL kann folglich als die optimale Bergungskapazität kap_be definiert werden.

Die Optimum-Bergungskapazität kap-opt entspricht einer idealen Größe bzw. Dimensionierung des Schwads 12, welche physikalisch durch eine ideale Schwaddicke D_schw-ideal repräsentiert werden kann. Sie kann als eine Masse des Schwadmaterials 12 pro Längeneinheit (vorzugsweise in kg/m) definiert sein.

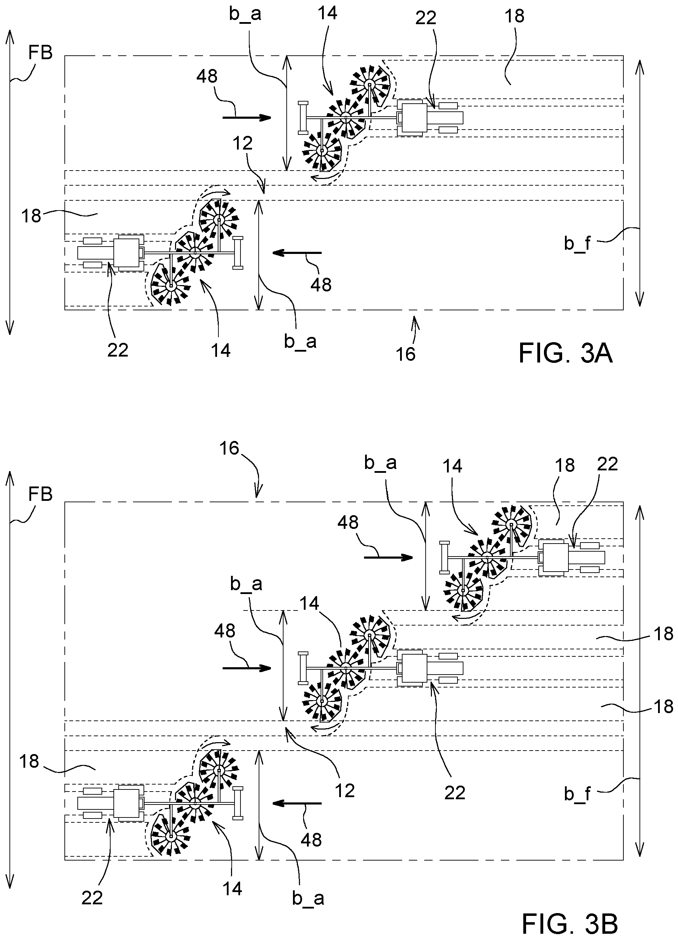

Ausgehend von der optimalen Bergungskapazität kap-opt (und somit auch einer idealen Schwaddicke D_schw-ideal) sowie dem Feldertrag er_f (z.B. in kg/m²) wird eine theoretische Ideal-Feldarbeitsbreite b_f-ideal ermittelt. Die Ideal-Feldarbeitsbreite b_f-ideal entspricht insbesondere derjenigen Feldbreite FB innerhalb des gemähten Agrarfeldes 16, in welcher die Menge oder Masse des gemähten Erntegutes 18 (z.B. pro Meter entlang des geplanten Schwadverlaufs) für die optimale Bergungskapazität kap-opt oder die ideale Schwaddicke D_schw-ideal genau ausreichend vorhanden ist (Fig. 3a, Fig. 3b). Somit repräsentiert die Ideal-Feldarbeitsbreite b_f-ideal entlang einer Feldbreite FB des gemähten Agrarfeldes 16 eine Ideal-Dimensionierung für das geplante Schwad 12.

In Abhängigkeit von der Ideal-Feldarbeitsbreite b_f-ideal und dem Typ typ_schw des geplanten Schwaders 14 wird eine Arbeitsstrategie strat zur Erstellung des Schwads 12 definiert. Dabei wird die Arbeitsstrategie strat vorzugsweise derart definiert, dass sie den theoretisch effizientesten Arbeitsbedingungen gemäß der Ideal-Feldarbeitsbreite b_f-ideal und gemäß der Kennlinie KL möglichst nahe kommt.

Auf Basis dieser Optimierungsstrategie werden in dem Ausführungsbeispiel gemäß Fig. 2 zwei mögliche Arbeitsstrategien strat-A1 und strat-A2 definiert. Die ausgewählte Arbeitsstrategie strat wiederum beeinflusst die Ermittlung der Planungsdaten d_plan. In dem Ausführungsbeispiel wird vorzugsweise die Arbeitsstrategie strat-A2 ausgewählt, da sie mit einer größeren Bergungsleistung dem Maximum der Kennlinie KL näher kommt als die Arbeitsstrategie strat-A1.

Beide Arbeitsstrategien strat-A1, strat-A2 weichen hinsichtlich der Bergungsleistung von der theoretisch optimalen Bergungsleistung kap-opt im Maximum der Kennlinie KL ab. Entsprechend weichen auch die mit den Arbeitsstrategien strat-A1, strat-A2 erzielbaren Schwaddicken D_schw von der idealen Schwaddicke D_schw-ideal im Maximum der Kennlinie KL ab.

Die Arbeitsstrategien strat-A1, strat-A2 enthalten spezifische Arbeitsgrößen, welche für die Erstellung des Schwads 12 relevant sind. Als Arbeitsgrößen für die Erstellung des Schwads 12 werden insbesondere eine geplante Anzahl n_spur von Fahrspuren 48 (oder Fahrten) des Schwaders 14 und/oder eine geplante Feldarbeitsbreite b_f innerhalb des gemähten Agrarfeldes 16 verwendet. Die geplante Feldarbeitsbreite b_f entspricht vorzugsweise einer Schwaderarbeitsbreite b_a des Schwaders 14 oder einem, insbesondere ganzzahligen, Vielfachen der Schwaderarbeitsbreite b_a. Die Arbeitsstrategien strat-A1, strat-A2 unterscheiden sich durch unterschiedliche Werte der Arbeitsgrößen.

Bei der Arbeitsstrategie strat-A1 sind zwei Fahrspuren 48 geplant, um das Schwad 12 zu erstellen. Dabei soll eine Feldarbeitsbreite b_f = 10 Meter innerhalb des gemähten Agrarfeldes 16 abgedeckt werden, um das Schwad 12 zu erstellen.

Bei der Arbeitsstrategie strat-A2 werden drei Fahrspuren 48 benötigt, um das geplante Schwad 12 zu erstellen. Dabei soll eine Feldarbeitsbreite b_f = 15 Meter innerhalb des gemähten Agrarfeldes 16 abgedeckt werden, um das Schwad 12 zu erstellen.

Fig. 3a und Fig. 3b zeigen die jeweils geplante Feldarbeitsbreite b_f, welche sich je Schwad 12 als Produkt aus der geplanten Anzahl n_spur von Fahrspuren 48 bzw. geplanten Anzahl der Fahrten des Schwaders 14 und dessen Schwaderarbeitsbreite b_a ergibt. Hierbei ist die geplante Feldarbeitsbreite b_f ein Abschnitt entlang der Feldbreite FB des gemähten Agrarfeldes 16.

Fig. 3a zeigt die Durchführung der Arbeitsstrategie strat-A1. Dort werden zwei Fahrspuren 48 und eine Feldarbeitsbreite b_f = 10 Meter zu einem Schwad 12 zusammengefasst.

Fig. 3b zeigt die Durchführung der Arbeitsstrategie strat-A2. Dort werden drei Fahrspuren 48 und eine Feldarbeitsbreite b_f = 15 Meter zu einem Schwad 12 zusammengefasst.

Bei der Durchführung einer Arbeitsstrategie strat können im Falle mehrerer geplanter Fahrspuren 48 diese entweder nacheinander durch denselben Schwader 14 befahren werden oder zumindest teilweise durch mehrere gleichzeitig aktive Schwader 14 befahren werden.

Anhand von Fig. 3a und Fig. 3b lassen sich auch folgende Anwendungsbeispiele erläutern:
Wird ausgehend von den Verhältnissen gemäß Fig. 3a bei vorausgesetztem gleichem Feldertrag er_f ein anderer Typ typ_ma einer Bergungsmaschine mit 50% größerer Bergungskapazität kap_be für die Bergung des Schwads 12 eingeplant, so ist es effizienter, die Arbeitsstrategie strat gemäß Fig. 3b durchzuführen, da dann eine um 50% größere Feldarbeitsbreite b_f zu einem entsprechend größeren Schwad 12 zusammengefasst werden kann.

Wird ausgehend von den Verhältnissen gemäß Fig. 3a bei vorausgesetztem gleichem Typ typ_ma der Bergungsmaschine 24 ein um etwa 30% geringerer Feldertrag er_f auf dem Agrarfeld 16 detektiert, so ist es ebenfalls effizienter, die Arbeitsstrategie strat gemäß Fig. 3b durchzuführen, weil dann die Feldarbeitsbreite b_f um 50% größer geplant werden muss, um ein Schwad 12 zu realisieren, welches dieselbe Größe wie bei den Verhältnissen gemäß Fig. 3a aufweist.

## Patentansprüche

1. Verfahren zur Planung eines Schwads (12), welches von einem Schwader (14) durch Zusammenrechen eines auf einem Agrarfeld (16) gemähten Erntegutes (18) erstellt wird, wobei Planungsdaten (d_plan) des Schwads (12) in Abhängigkeit von mindestens einem der folgenden Planungsparameter ermittelt werden:
- Felddaten (d_f), welche mindestens ein Merkmal des gemähten Agrarfeldes (16) repräsentieren,
- ein Typ (typ_er) des Erntegutes (18),
- ein Typ (typ_schw) eines geplanten Schwaders (14),
- ein Typ (typ_ma) einer geplanten Bergungsmaschine (24) zum Bergen des erstellten Schwads (12),
- eine Schnittlänge (l_schn) des während einer Bergung verarbeiteten Schwadmaterials (12).

2. Verfahren nach Anspruch 1, **dadurch gekennzeichnet, dass** die Felddaten (d_f) eine Feldtopologie (to_f) und/oder Feldgrenzen (gr_f) und/oder einen Feldertrag (er_f) umfassen.

3. Verfahren nach Anspruch 1 oder 2, **dadurch gekennzeichnet, dass** die Planungsdaten (d_plan) in Abhängigkeit von bereitgestellten Bergungs-Kenndaten (KD) der Bergungsmaschine (24) ermittelt werden.

4. Verfahren nach Anspruch 3, **dadurch gekennzeichnet, dass** die Bergungs-Kenndaten (KD) in Abhängigkeit von mindestens einem Planungsparameter (typ_er, typ_ma, l_schn) generiert und bereitgestellt werden.

5. Verfahren nach Anspruch 3 oder 4, **dadurch gekennzeichnet, dass** die Bergungs-Kenndaten (KD, KL) ein Verhältnis zwischen einer Bergungskapazität (kap_be) und einer Bergungsgeschwindigkeit (v_be) der Bergungsmaschine (24) repräsentieren.

6. Verfahren nach einem der Ansprüche 3 bis 5, **dadurch gekennzeichnet, dass** zur Ermittlung der Planungsdaten (d_plan) aus den Bergungs-Kenndaten (KD, KL) eine Optimum-Bergungskapazität (kap-opt) der Bergungsmaschine (24) bestimmt wird.

7. Verfahren nach Anspruch 6, **dadurch gekennzeichnet, dass** die Optimum Bergungskapazität (kap-opt) einer Bergungskapazität (kap_be) bei einer maximalen Bergungsgeschwindigkeit (v_max) der Bergungsmaschine (24) entspricht.

8. Verfahren nach einem der vorhergehenden Ansprüche,
**dadurch gekennzeichnet, dass** die Planungsdaten (d_plan) in Abhängigkeit von einer Arbeitsstrategie (strat) zur Erstellung des Schwads (12) ermittelt werden, wobei die Arbeitsstrategie (strat) in Abhängigkeit von mindestens einem Planungsparameter und/oder der Optimum-Bergungskapazität (kap-opt) und/oder dem Typ (typ_schw) des geplanten Schwaders (14) definiert wird.

9. Verfahren nach Anspruch 8, **dadurch gekennzeichnet, dass** die Arbeitsstrategie (strat) in Abhängigkeit von einer Ideal-Feldarbeitsbreite (b_f-ideal) definiert wird, welche sich innerhalb des gemähten Agrarfeldes (16) quer zu einer Fahrspur (48) des Schwaders (14) erstreckt und eine Dimensionierung für das geplante Schwad (12) repräsentiert, welche in Abhängigkeit von der Optimum-Bergungskapazität (kap-opt) und/oder dem Feldertrag (er_f) ermittelbar ist.

10. Verfahren nach Anspruch 8 oder 9, **dadurch gekennzeichnet, dass** die Arbeitsstrategie (strat) mindestens eine Arbeitsgröße (n_spur, b_f) zur Erstellung des Schwads (12) enthält, wobei die Arbeitsgröße insbesondere
- eine geplante Anzahl (n_spur) von Fahrspuren (48) des Schwaders (12) für die Erstellung des Schwads (12) repräsentiert, oder
- eine geplante Feldarbeitsbreite (b_f) innerhalb des gemähten Agrarfeldes (16) repräsentiert, welche einer Schwaderarbeitsbreite (b_a) des Schwaders (14) oder einem Vielfachen der Schwaderarbeitsbreite (b_a) entspricht.

11. Verfahren nach einem der vorhergehenden Ansprüche,
**dadurch gekennzeichnet, dass** die Planungsdaten (d_plan) in Abhängigkeit von einer maximalen Schwadbreite (B_schwmax) des Schwads (12) ermittelt werden, wobei die maximale Schwadbreite (B_schw-max) in Abhängigkeit von dem Typ (typ_schw) des geplanten Schwaders (12) und/oder dem Typ (typ_ma) der geplanten Bergungsmaschine (22) definiert wird.

12. System (10) zur Planung eines Schwads (12), mit einem Schwader (14) zur Erstellung des Schwads (12) durch Zusammenrechen eines auf einem Agrarfeld (16) gemähten Erntegutes (18) und mit einer Steuereinheit (26) zur Durchführung des Verfahrens nach einem der Ansprüche 1 bis 11.

13. System nach Anspruch 12, **dadurch gekennzeichnet, dass** die Steuereinheit (26) in einem mit dem Schwader (14) gekoppelten landwirtschaftlichen Nutzfahrzeug (22) enthalten ist.

14. System nach Anspruch 13, **dadurch gekennzeichnet, dass** das landwirtschaftliche Nutzfahrzeug (22) autonom fahrfähig ist.

15. System nach einem der Ansprüche 12 bis 14, **dadurch gekennzeichnet, dass** mindestens eine der folgenden Komponenten Bestandteil des Systems (10) ist und mit der Steuereinheit (26) über eine Datenverbindung (28, 34) verbunden ist:
- eine Benutzerschnittstelle (32) zur Eingabe von Daten,
- ein Positionserfassungssystem (30),
- eine Datenzentrale (36) mit Felddaten (d_f), welche mindestens ein Merkmal des gemähten Agrarfeldes (16) repräsentieren,
- eine Mähmaschine (20) zum Mähen des Erntegutes (18),
- eine Bergungsmaschine (24) zur Bergung des Schwads (12),
- eine Datenbank (36) mit Daten, welche zumindest Bergungs-Kenndaten (KD) der Bergungsmaschine (24) repräsentieren.
